# EUROPÄISCHE PATENTSCHRIFT

(11) **EP 3 470 164 B1**
(45) Veröffentlichungstag und Bekanntmachung des Hinweises auf die Patenterteilung: **20.01.2021**
(21) Anmeldenummer: 17196372.1
(22) Anmeldetag: 13.10.2017
(51) Int. Cl.: B23K 26/08, B65G 17/06

(54) **FÖRDERGURT ZUM TRANSPORTIEREN EINES WERKSTÜCKS IN EINER LASERSTRAHLSBEARBEITUNGSVORRICHTUNG**
CONVEYOR BELT FOR TRANSPORTING A WORKPIECE IN A LASER TREATMENT APPARATUS
BANDE DE TRANSPORT PERMETTANT DE TRANSPORTER UNE PIÈCE DANS UNE MACHINE DE TRAITEMENT AU LASER

(43) Veröffentlichungstag der Anmeldung: 17.04.2019
(73) Patentinhaber: Adolf Mohr Maschinenfabrik GmbH & Co. KG, 65719 Hofheim am Taunus (DE)
(72) Erfinder: WEISS, Mickael, 65779 Kelkheim (DE)
(74) Vertreter: Franke, Markus

(56) Entgegenhaltungen:
- EP-A1- 0 502 639
- DE-B- 1 281 350
- FR-A- 1 358 013
- FR-A1- 2 564 017
- US-A1- 2006 051 512

## Beschreibung

Die Erfindung betrifft eine Vorrichtung zum Bearbeiten eines Werkstücks mittels eines Laserstrahls einer Laserquelle der Vorrichtung, wobei die Vorrichtung eine Fördereinrichtung zum Transportieren eines Werkstücks in einen Bearbeitungsbereich der Vorrichtung hinein und aus dem Bearbeitungsbereich der Vorrichtung heraus aufweist. Die Fördereinrichtung weist dabei einen in einer Förderrichtung verfahrbaren Fördergurt auf. Die Vorrichtung dient insbesondere dem Schneiden oder Gravieren eines blattförmigen Werkstücks, insbesondere eines Werkstücks aus Pappe, Papier oder Kunststoff, beispielsweise einer Folie.

Mittels einer derartigen Vorrichtung können beispielsweise feine Strukturen aus einem Papierbogen oder dergleichen ausgeschnitten werden, um eine hochwertige, optisch attraktive, filigran gestaltete Grußkarte, Postkarte, Visitenkarte oder einen entsprechenden Flyer herzustellen.

Eine Vorrichtung der eingangs genannten Art ist aus der US 2015/0231822 A1 und ferner aus der FR 2 564 017 A1 bekannt.

Die in der US 2015/0231822 A1 beschriebene Vorrichtung weist eine Fördereinrichtung mit einem in einer Förderrichtung verfahrbaren umlaufenden Fördergurt auf, wobei es sich bei dem Fördergurt um einen metallischen Fördergurt handelt. In diesen Fördergurt sind mehrere Löcher eingebracht, wobei die Fördereinrichtung auf einer dem Werkstück abgewandten Seite des Fördergurts eine Ansaugvorrichtung aufweist zur Erzeugung eines Unterdrucks, wobei die zu bearbeitenden Werkstücke durch den Unterdruck an dem Fördergurt fixiert werden.

Bei der Bearbeitung von Werkstücken mittels eines Laserstrahls, insbesondere beim Schneiden oder Gravieren eines blattförmigen, insbesondere dünnen Werkstücks, beispielsweise eines Papierbogens, tritt die Problematik auf, dass ein das Werkstück beim Bearbeiten durchdringender Laserstrahl an dem Fördergurt reflektiert wird, derart, dass der reflektierte Laserstrahl auf eine dem Fördergurt zugewandte Seite - Unterseite - des Werkstücks auftritt, wodurch das Werkstück auf dieser zugewandten Seite durch den reflektierten Laserstrahl beschädigt oder gar vollständig durchtrennt wird. Insbesondere kann es beim Bearbeiten von Papierbögen oder Pappebögen aufgrund der Rückreflexion des Laserstrahls zu Brennspuren oder Sengspuren an der dem Fördergut zugewandten Seite oder gar zu einer Flammenbildung kommen. Daher ist insbesondere beim Bearbeiten von blattförmigen Werkstücken aus Pappe, Papier oder Kunststoff eine Rückreflexion des Laserstrahls zu vermeiden.

Die in der FR 2 564 017 A1 beschriebene Vorrichtung, welche die Merkmale des Oberbegriffs des Patentanspruchs 1 aufweist, weist eine Fördereinrichtung mit einem in einer Förderrichtung verfahrbaren, umlaufenden Fördergurt auf, wobei es sich bei dem Fördergurt um einen metallischen Fördergurt handelt. Der Fördergurt weist eine Auflagestruktur zur Auflage des Werkstücks und eine Trägerstruktur zur Lagerung der Auflagestruktur auf. Die Auflagestruktur und die Trägerstruktur sind jeweils bandförmig ausgebildet, wobei die Auflagestruktur an der Trägerstruktur befestigt, vorzugsweise die Auflagestruktur mit der Trägerstruktur verklebt ist. Die Auflagestruktur weist in einer Draufsicht eine Quasi-Wabenstruktur mit einer Vielzahl von quasi-wabenförmigen Öffnungen auf.

Des Weiteren besteht die Problematik, dass bei der Verwendung des Fördergurts der Laserstrahl beim Bearbeiten des Werkstücks, insbesondere beim Schneiden des Werkstücks, auf den Fördergurt auftrifft, wodurch es abhängig von einem Absorptionsvermögen des Materials des Fördergurts zu einem mehr oder weniger starken Energieübertrag in den Fördergurt kommt. Insbesondere bei einem Fördergurt, der aus einem Material besteht bzw. ein Material aufweist, das, zur Vermeidung von Rückreflexionen in Richtung des Werkstücks, ein relativ großes Absorptionsvermögen und ein relativ geringes Reflexionsvermögen für die Wellenlänge des verwendeten Lasers aufweist, kommt es aufgrund des auf den Fördergurt einwirkenden Laserstrahls zu Beschädigungen des Fördergurts, sodass es, insbesondere bei einem Dauerbetrieb der Fördereinrichtung bzw. der Vorrichtung zum Bearbeiten des Werkstücks, zu einer Beschädigung des Fördergurts kommt, welche eine Reparatur der Fördereinrichtung, insbesondere einen Austausch des Fördergurts notwendig macht. Derartige Reparaturen bzw. der Austausch des Fördergurts sind meist mit einem hohem Kosten-, Arbeits- und Zeitaufwand verbunden. Selbst bei nur lokalen Beschädigungen des Fördergurts ist mangels Reparaturmöglichkeit meist ein vollständiger Austausch des Fördergurts notwendig.

Des Weiteren wird von der Trotec Laser Deutschland GmbH eine unter der Bezeichnung GS1200 geführte automatisierte Laser-Schneidanlage angeboten, wobei ein zu schneidendes Papier im Bearbeitungsbereich der Anlage "frei schwebend", das heißt nur seitlich von Klammern gehalten, bearbeitet wird, wodurch Rückreflexionen des Laserstrahls auf eine Rückseite des Werkstücks vermieden werden. Nachteilig bei dieser Laser-Schneidanlage ist, dass zwecks Haltens des Werkstücks eine Zugspannung in das Werkstück eingebracht wird, wobei es aufgrund der Zugspannung zu einer Beschädigung des Werkstücks, insbesondere zu einem Zerreißen des Werkstücks kommen kann, insbesondere wenn beim Bearbeiten des Werkstücks größere Teilbereiche aus dem Werkstück herausgeschnitten werden.

Aus der AT 505 173 A1 ist eine Vorrichtung zum Bearbeiten von Werkstücken mit einem Laserstrahl bekannt, wobei die Vorrichtung einen Werkstückaufnahmetisch mit einer Stützeinrichtung für die Werkstücke und einem wannenförmigen Unterteil aufweist, an den eine Vorrichtung zum Erzeugen eines Unterdrucks angeschlossen ist, wobei die Stützeinrichtung auswechselbar mit dem Unterteil verbunden ist. Die Stützeinrichtung weist eine Vielzahl von parallel nebeneinander angeordneten Stützlamellen für die Auflage der Werkstücke auf. Die Stützlamellen sind dabei in Schlitzen von Haltestreben aufgenommen und durch Federzungen festgehalten. Diese Konstruktion ermöglicht dem Benutzer der Vorrichtung, die Lamellen selbst und ohne Hilfe von Werkzeugen auszutauschen.

Aufgabe der vorliegenden Erfindung ist es, eine Vorrichtung, die die Merkmale des Oberbegriffs des Patentanspruchs 1 aufweist, derart weiterzubilden, dass eine Rückreflexion des Laserstrahls auf eine dem Fördergurt zugewandte Seite des Werkstücks vermieden wird und zudem eine einfache, kostengünstige und schnelle Reparatur des Fördergurts ermöglicht ist.

Diese Aufgabe wird durch eine Vorrichtung, die die Merkmale des Patentanspruchs 1 aufweist, gelöst.

Die Fördereinrichtung dient dem Transportieren eines Werkstücks in den Bearbeitungsbereich einer Vorrichtung zum Bearbeiten des Werkstücks mittels eines Laserstrahls einer Laserquelle der Vorrichtung hinein und aus dem Bearbeitungsbereich der Vorrichtung heraus. Die Vorrichtung dient insbesondere dem Schneiden oder Gravieren eines blattförmigen Werkstücks aus Pappe, Papier oder Kunststoff, beispielsweise einer Folie. Die Fördereinrichtung weist einen in eine Förderrichtung Z verfahrbaren Fördergurt auf, wobei der Fördergurt eine Trägerstruktur und eine Vielzahl von beabstandet zueinander angeordneten Stützelementen aufweist, wobei das jeweilige Stützelement einen Lagerabschnitt und einen Stützabschnitt aufweist. Das jeweilige Stützelement ist mit seinem Lagerabschnitt lösbar in der Trägerstruktur gelagert, wobei der Stützabschnitt des jeweiligen Stützelements an einem dem Lagerabschnitt abgewandten Ende gegenüber der Trägerstruktur hervorsteht. Dabei bilden die Stützabschnitte benachbarter Stützelemente eine Auflagefläche für das Werkstück.

Dadurch, dass die Stützelemente beabstandet zueinander angeordnet sind, ist ein Anteil einer Fläche des Werkstücks, die dem Fördergurt zugewandt ist und den Fördergurt, nämlich die Stützabschnitte der Stützelemente, kontaktiert, gegenüber einem Fördergurt, welcher eine geschlossene Auflagefläche oder annähernd geschlossene Auflagefläche aufweist, reduziert. Dadurch werden Rückreflexionen, die zu einer Beschädigung des Werkstücks führen können, vermieden. Derartige Rückreflexionen treten aufgrund der typischweise geringen Fokuslänge des Laserstrahls nur an solchen Flächen auf, die einen geringen Abstand zu dem Werkstück haben, insbesondere an solchen Flächen, die unmittelbar an dem Werkstück anliegen.

Des Weiteren sind aufgrund der zueinander beabstandet angeordneten Stützelemente Zwischenbereiche zwischen den Stützelementen gebildet, durch die eine Ansaugung des Werkstücks zwecks Fixierung des Werkstücks mittels einer Ansaugvorrichtung erfolgen kann. Auch können durch die Zwischenbereiche zwischen den Stützelementen beim Bearbeitungsvorgang entstandene Gase, Dämpfe und/oder Partikel, insbesondere Ruß oder Schmauch, mittels einer Absaugvorrichtung aus dem Bearbeitungsbereich abgesaugt werden. Dadurch wird vermieden, dass sich Ruß, Schmauchspuren oder Ähnliches auf dem Werkstück niederschlagen, was sich nachteilhaft auf die Qualität des Werkstücks und auf die weitere Bearbeitung des Werkstücks mit dem Laserstrahl auswirken würde. Des Weiteren wird durch die Absaugung verhindert, dass schädliche Stoffe, in die Umgebung der Vorrichtung zum Bearbeiten des Werkstücks gelangen, dass im Bearbeitungsbereich Flammen entstehen und dass empfindliche Werkstücke durch Beschlagen mit Staub oder Ähnlichem unbrauchbar oder in ihrer Qualität gemindert werden.

Aufgrund der lösbaren Lagerung der Stützelemente in der Trägerstruktur ist ein einfacher, kostengünstiger und schneller Austausch eines beschädigten Stützelements möglich. Dadurch werden längere Standzeiten der Fördereinrichtung und somit längere Standzeiten einer mit der Fördereinrichtung ausgestatteten Vorrichtung zum Bearbeiten des Werkstücks vermieden.

Insbesondere ist es nicht notwendig, den Fördergurt der Fördereinrichtung zwecks Austauschs des beschädigten Stützelements zu demontieren. Vielmehr kann der Austausch des Stützelements an dem montierten, insbesondere gespannten Fördergurt erfolgen, da das jeweilige Stützelement unabhängig von den übrigen Stützelementen lösbar in der Trägerstruktur gelagert ist.

Vorzugsweise ist das jeweilige Stützelement ortsfest lösbar in der Trägerstruktur gelagert. Dabei wird unter dem Begriff ortsfest verstanden, dass bei einem Betrieb der Fördereinrichtung eine keine oder nur eine geringe Verschiebung der Stützelemente auftreten kann.

Das Stützelement ist vorzugsweise einstückig ausgebildet.

Hinsichtlich einer einfachen Reparatur wird es als besonders vorteilhaft angesehen, wenn das jeweilige Stützelement werkzeuglos ausgetauscht werden kann.

Vorzugsweise ist das Stützelement in die Trägerstruktur eingesteckt, insbesondere rastierend eingesteckt. Zu diesem Zweck weist die Trägerstruktur vorzugsweise eine Aufnahme für das Stützelement oder das Stützelement weist eine Aufnahme für die Trägerstruktur auf. Vorzugsweise ist das Stützelement rastierend in die Trägerstruktur eingesteckt oder umgekehrt.

In einer vorteilhaften Weiterbildung der Fördereinrichtung verlaufen die Lagerstäbe winklig, insbesondere senkrecht, zu der Förderrichtung.

Insbesondere ist das jeweilige Stützelement in zwei in der Förderrichtung benachbarten Lagerstäben gelagert.

Es ist aber auch durchaus denkbar, dass die Trägerstruktur mehrere längs zu der Förderrichtung verlaufende Lagerstäbe aufweist, wobei das jeweilige Stützelement in zwei benachbarten Lagerstäben gelagert ist.

Dadurch, dass das jeweilige Stützelement in zwei Lagerstäben gelagert ist, insbesondere in zwei benachbarten Lagerstäben gelagert ist, versteifen die Stützelemente den Fördergurt, wodurch die Stützelemente den Fördergurt strukturell stabilisieren, sodass auf zusätzliche Versteifungselemente zwecks struktureller Stabilisierung des Fördergurts verzichtet werden kann. Insofern bilden die Stützelemente quasi strukturelle Elemente des Fördergurts, bilden somit quasi einen integralen Bestandteil des Fördergurts und sind nicht nur lediglich mit einem üblichen, das heißt an sich strukturell stabilen Fördergurt, verbunden.

Das jeweilige Stützelement ist schwenkbar in dem jeweiligen Lagerstab gelagert. Insbesondere bei der Ausführungsform, bei der die Trägerstruktur mehrere quer, insbesondere senkrecht, zu der Förderrichtung verlaufende Lagerstäbe aufweist, und das jeweilige Stützelement in zwei in der Förderrichtung benachbarten Lagerstäben gelagert ist, ist durch die schwenkbare Lagerung des Stützelements in dem jeweiligen Lagerstab gewährleistet, dass bei einem als umlaufenden Fördergurt ausgebildeten Fördergurt die Umlenkung des Fördergurts an einer Umlenkrolle und/oder Antriebswelle nicht durch die Stützelemente behindert wird.

Das Stützelement weist zwei Ausnehmungen auf, wobei die eine Ausnehmung den einen Lagerstab der zwei Lagerstäbe und die andere Ausnehmung den anderen Lagerstab der zwei Lagerstäbe aufnimmt.

Insbesondere nimmt die eine Ausnehmung und/oder die andere Ausnehmung den jeweiligen Lagerstab rastierend auf.

In diesem Zusammenhang wird es als besonders vorteilhaft angesehen, wenn die zwei Ausnehmungen des Stützelements in eine dem Stützabschnitt abgewandte Richtung offen sind. Dadurch ist ein einfaches Verbinden des Stützelements mit der Trägerstruktur, nämlich den zwei Lagerstäben, möglich. Zu diesem Zweck kann das Stützelement mittels einer linearen Bewegung des Stützelements in Richtung der Trägerstruktur in die zwei Lagerstäbe vorzugsweise rastierend eingesetzt werden.

In einer alternativen Ausführungsform ist die eine Ausnehmung der zwei Ausnehmungen des Stützelements in eine dem Stützabschnitt abgewandte Richtung offen und die andere Ausnehmung der zwei Ausnehmungen ist in der Förderrichtung offen oder entgegengesetzt zu der Förderrichtung offen. Das Einsetzen des Stützelements in die benachbarten Lagerstäbe kann dann derart erfolgen, dass zunächst die andere Ausnehmung der zwei Ausnehmungen in einer Richtung winklig zu der Förderrichtung in den anderen Lagerstab eingesetzt wird, sodass die andere Ausnehmung den anderen Lagerstab aufnimmt. Im Anschluss daran wird das Stützelement um eine durch den anderen Lagerstab gebildete Achse mit der einen Aufnahme in Richtung des einen Lagerstabs verschwenkt, sodass die eine Ausnehmung des Stützelements den einen Lagerstab aufnimmt. Dadurch ist eine einfache Montage bei dennoch sicherer Lagerung des Stützelements gewährleistet. Die Demontage erfolgt entsprechend umgekehrt.

Vorzugsweise hintergreift ein Teilbereich des Lagerabschnitts den in der einen Ausnehmung und/oder in der anderen Ausnehmung aufgenommenen Lagerstab auf einer dem Stützabschnitt abgewandten Seite. Dadurch ist ein besonders guter Halt des Stützelements in der Trägerstruktur gewährleistet.

Als besonders vorteilhaft wird es angesehen, wenn die andere Ausnehmung der zwei Ausnehmungen in der Förderrichtung eine größere Erstreckung aufweist als der in dieser anderen Ausnehmung aufgenommene Lagerstab. Bei einer derartigen Gestaltung der anderen Ausnehmung ist ein Verbinden des Stützelements bzw. ein Lösen des Stützelements aus der Trägerstruktur besonders einfach möglich. Da die andere Ausnehmung der zwei Ausnehmungen in der Förderrichtung eine größere Erstreckung aufweist als der in dieser anderen Ausnehmung aufgenommene andere Lagerstab, ist eine relative Lageänderung des Lagerstabs in dieser anderen Ausnehmung in der Förderrichtung möglich. Folglich ist der andere Lagerstab in dieser anderen Ausnehmung mit einem gewissen Spiel gelagert, wodurch vermieden wird, dass durch eine Veränderung eines Abstandes der das Stützelement aufnehmenden Lagerstäbe in der Förderrichtung Spannungen in das Stützelement eingeleitet werden, die zu einer Beschädigung oder gar Zerstörung des Stützelements führen könnten.

In diesem Zusammenhang wird es als besonders vorteilhaft angesehen, wenn die eine Ausnehmung der zwei Ausnehmungen den in dieser einen Ausnehmung angeordneten einen Lagerstab in der Förderrichtung spielfrei aufnimmt.

Vorzugsweise ist der Fördergurt als umlaufender Fördergurt ausgebildet. Es ist aber auch durchaus denkbar, dass der Fördergurt zwecks Transportieren des Werkstücks in den Bearbeitungsbereich der Vorrichtung hinein in eine erste Förderrichtung verfährt und zwecks Transportieren des Werkstücks aus dem Bearbeitungsbereich der Vorrichtung heraus in eine der ersten Förderrichtung entgegengesetzte Förderrichtung verfährt.

Der Stützabschnitt ist plattenförmig ausgebildet, wobei gegenüberliegende Hauptausdehnungsflächen des Stützabschnitts winklig, insbesondere senkrecht zu der Förderrichtung ausgebildet sind, wobei zwischen den Hauptausdehnungsflächen ausgebildete Außenkanten des Stützabschnitts der Stützelemente die Auflagefläche für das Werkstück bilden, wobei die die Auflagefläche bildende Außenkante mehrere in die der Trägerstruktur abgewandte Richtung hervorstehende Vorsprünge aufweist, zur Vermeidung von Reflexionen des Laserstrahls auf eine Unterseite des Werkstücks,
und/oder
der Stützabschnitt des Stützelements weist einen sich in die der Trägerstruktur abgewandte Richtung verjüngenden Querschnitt auf, zur Vermeidung von Reflexionen des Laserstrahls auf die Unterseite des Werkstücks.

In einer besonders bevorzugten Ausführungsform ist der Lagerabschnitt, vorzugsweise das gesamte Stützelement, plattenförmig ausgebildet, wobei gegenüberliegende Hauptausdehnungsflächen des Lagerabschnitts winklig, insbesondere senkrecht zu der Förderrichtung ausgebildet sind, wodurch Reflexionen des Laserstrahls in Richtung der dem Fördergurt zugewandten Seite des Werkstücks vermieden werden.

Es wird als besonders vorteilhaft angesehen, wenn zwischen den Hauptausdehnungsflächen ausgebildete Außenkanten des Stützabschnitts der Stützelemente die Auflagefläche für das Werkstück bilden. Dadurch ist der Anteil der Fläche des Werkstücks, welche dem Fördergurt zugewandt ist und die Stützelemente kontaktiert, weiter reduziert. Darüber hinaus sind die Zwischenbereiche bei einer derartigen Gestaltung relativ groß, sodass eine besonders gute Fixierung des Werkstücks an dem Fördergurt mittels der Absaugvorrichtung möglich ist und zudem mittels des Laserstrahls ausgeschnittene Teilabschnitte des Werkstücks durch die Zwischenbereiche zwischen den Stützelementen abgefördert bzw. abgesaugt werden können. Größere Zwischenbereiche wirken sich zudem vorteilhaft auf die Absaugung der beim Bearbeiten entstehenden Gase und Partikel aus.

Hinsichtlich einer möglichst geringen Kontaktfläche zwischen den Stützelementen und dem zu bearbeitenden Werkstück wird es als zweckmäßig angesehen, wenn die die Auflagefläche bildende Außenkante des Stützelements mehrere in die der Trägerstruktur abgewandte Richtung hervorstehende Vorsprünge aufweist, insbesondere die Außenkante eine Zahnung aufweist, zur Vermeidung von Reflexionen des Laserstrahls auf die dem Fördergurt zugewandte Seite - Unterseite - des Werkstücks.

Um potenzielle Reflexionen des Laserstrahls auf die Unterseite des Werkstücks weiter zu reduzieren, wird es als vorteilhaft angesehen, wenn der Stützabschnitt des Stützelements einen sich in die der Trägerstruktur abgewandten Richtung verjüngenden Querschnitt aufweist, insbesondere der Stützabschnitt des Stützelements sich in die der Trägerstruktur abgewandte Richtung konisch verjüngt.

In einer bevorzugten Ausführungsform der Fördereinrichtung weist das Stützelement zwei senkrecht zu der Förderrichtung beabstandete Lagerabschnitte auf. Dadurch wird ein besonders guter Halt des Stützelements an der Trägerstruktur gewährleistet, da ein Verdrehen des Stützelements bezüglich der Trägerstruktur aufgrund der beiden beabstandeten Lagerabschnitte verhindert oder zumindest erschwert ist. Zudem wird der gesamte Fördergurt mit derartigen Stützelementen verwindungssteifer.

Zur Vermeidung von Reflexionen des Laserstrahls auf die Unterseite des Werkstücks wird es weiterhin als vorteilhaft angesehen, wenn der Stützabschnitt und/oder der Lagerabschnitt, insbesondere das gesamte Stützelement aus einem Material besteht oder ein Material aufweist, welches für eine von der Laserquelle emittierte Laserstrahlung einen Reflexionsgrad von 0,0 bis 0,2 aufweist, vorzugsweise von 0,0 bis 0,1 aufweist.

Der Stützabschnitt und/oder der Lagerabschnitt besteht vorzugsweise aus Acrylglas oder weist Acrylglas auf. Acrylglas weist insbesondere für elektromagnetische Wellen mit Wellenlängen im UV-Bereich einen relativ geringen Reflexionsgrad auf, sodass sich Acrylglas besonders gut für Stützelemente eignet, die bei Fördereinrichtungen für Laser-Bearbeitungs-Vorrichtungen eingesetzt werden, deren Laserquelle einen Laserstrahl mit einer Wellenlänge im UV-Bereich emittiert, wie dies typischerweise bei Vorrichtungen zum Bearbeiten von organischen Materialien, wie beispielsweise Pappe oder Papier, der Fall ist. Bei der Laserquelle handelt es sich dabei in der Regel um einen Kohlendioxidlaser, häufig auch als CO2-Laser bezeichnet.

Zudem sind Stützelemente, die aus Acrylglas bestehen, einfach und kostengünstig herstellbar.

Ein weiterer Vorteil bei der Verwendung von Acrylglas besteht darin, dass Beschädigungen des Stützelements optisch besonders einfach feststellbar sind, somit bereits vor einer Zerstörung des Stützelements die auszutauschenden Stützelemente besonders einfach ermittelt und vor deren Zerstörung ausgetauscht werden können.

Vorzugsweise weist der Stützabschnitt und/oder der Lagerabschnitt eine raue Oberfläche auf, zur Vermeidung von Reflexionen des Laserstrahls auf die Unterseite des Werkstücks.

In den Figuren ist die Erfindung anhand mehrerer Ausführungsformen dargestellt, ohne hierauf beschränkt zu sein.

Es zeigt:
- Fig. 1: eine Anordnung von einer Vorrichtung, zum Bearbeiten eines Werkstücks mittels eines Laserstrahls, und einer Fördereinrichtung, zum Transportieren des Werkstücks in den Bearbeitungsbereich der Vorrichtung hinein und aus dem Bearbeitungsbereich der Vorrichtung heraus, in einer Seitenansicht,
- Fig. 2: die Anordnung gemäß Fig. 1 in einer perspektivischen Ansicht,
- Fig. 3: die Fördereinrichtung der Anordnung gemäß Fig. 1 mit auf einen Fördergurt der Fördereinrichtung aufgelegten Werkstücken, in einer perspektivischen Ansicht,

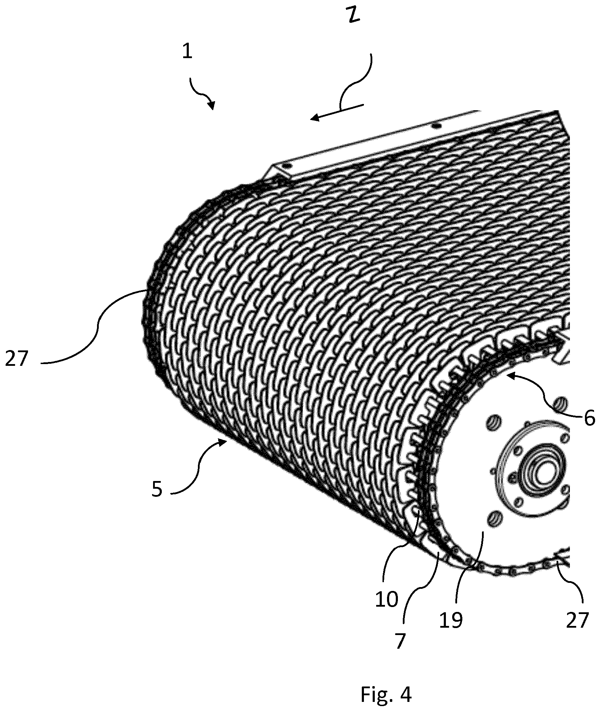

- Fig. 4: einen Teilbereich der Fördereinrichtung gemäß Fig. 3, in einer perspektivischen Ansicht,
- Fig. 5: einen Teilbereich des Fördergurts der Fördereinrichtung gemäß Fig. 3, in einer perspektivischen Ansicht,
- Fig. 6: ein Stützelement des Fördergurts gemäß Fig. 5, in einer perspektivischen Ansicht,
- Fig. 7: eine zweite Ausführungsform des Stützelements, in einer perspektivischen Ansicht,
- Fig. 8: eine dritte Ausführungsform des Stützelements, in einer perspektivischen Ansicht,
- Fig. 9: eine vierte Ausführungsform des Stützelements, in einer perspektivischen Ansicht,
- Fig. 10: eine fünfte Ausführungsform des Stützelements, in einer perspektivischen Ansicht.

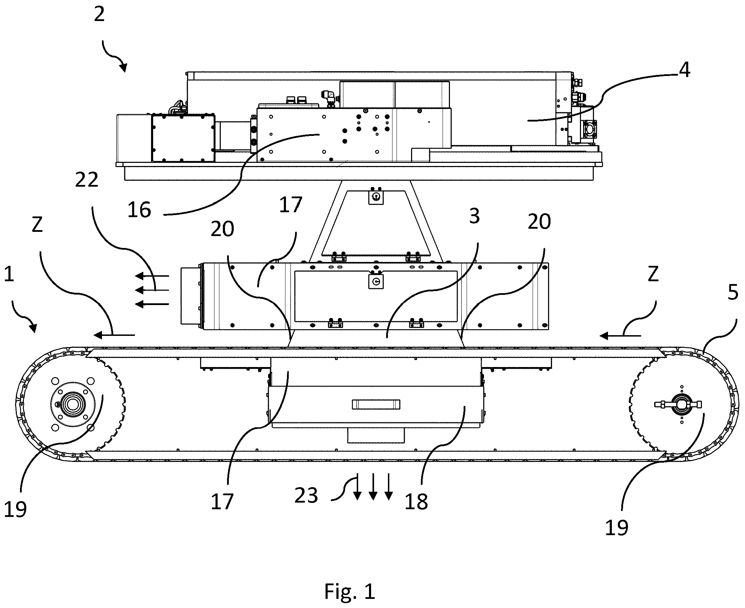

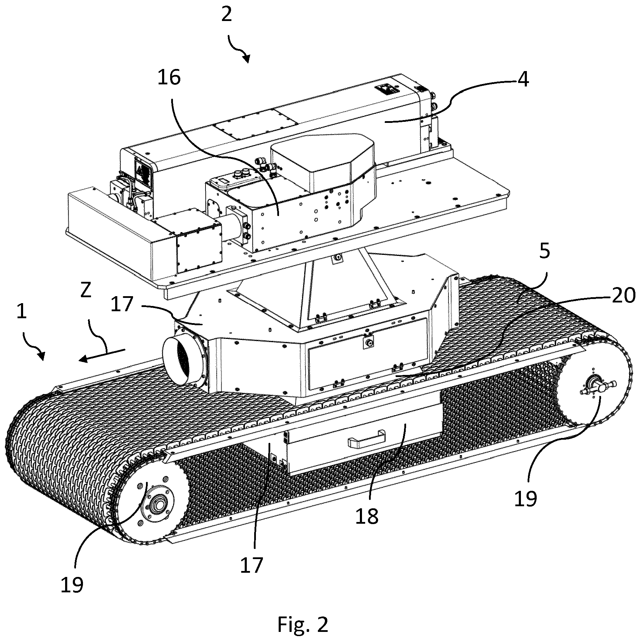

Die Fig. 1 und 2 zeigen eine Vorrichtung 2 zum Bearbeiten eines Werkstücks 24 mittels eines Laserstrahls 25 einer Laserquelle 4 der Vorrichtung 2, wobei die Vorrichtung 2 einen Bearbeitungsbereich 3 zum Bearbeiten des Werkstücks 24 mittels des Laserstrahls 25 aufweist. Im Bereich der Vorrichtung 2 ist eine Fördereinrichtung 1 zum Transportieren eines Werkstücks 24 in den Bearbeitungsbereich 3 der Vorrichtung 2 hinein und aus dem Bearbeitungsbereich 3 der Vorrichtung 2 heraus angeordnet. Die Fördereinrichtung 1 weist einen in einer Förderrichtung Z verfahrbaren Fördergurt 5 auf, wobei der Fördergurt 5 als umlaufender Fördergurt 5 ausgebildet ist und über zwei in der Förderrichtung Z beabstandet angeordnete Umlenkrollen 19 umgelenkt wird. Zumindest eine der Umlenkrollen 19 ist mittels eines nicht weiter dargestellten Antriebs antreibbar zwecks Verfahrens des Fördergurts 5 in der Förderrichtung Z.

Der von der Laserquelle 4 emittierte Laserstrahl 25 wird über eine Laseroptik 16 umgelenkt und in dem Bearbeitungsbereich 3 fokussiert, wobei der Bearbeitungsbereich 3 quasi eine Grundfläche eines konischen Strahlbereichs 20 bildet, wobei der Strahlbereich 20 den Bereich bildet, der für den Laserstrahl 25 durch Variieren der Laseroptik 16 zugänglich ist. Der Strahlbereich 20 bildet vorliegend eine vierseitige Pyramide mit einer quadratischen Grundfläche.

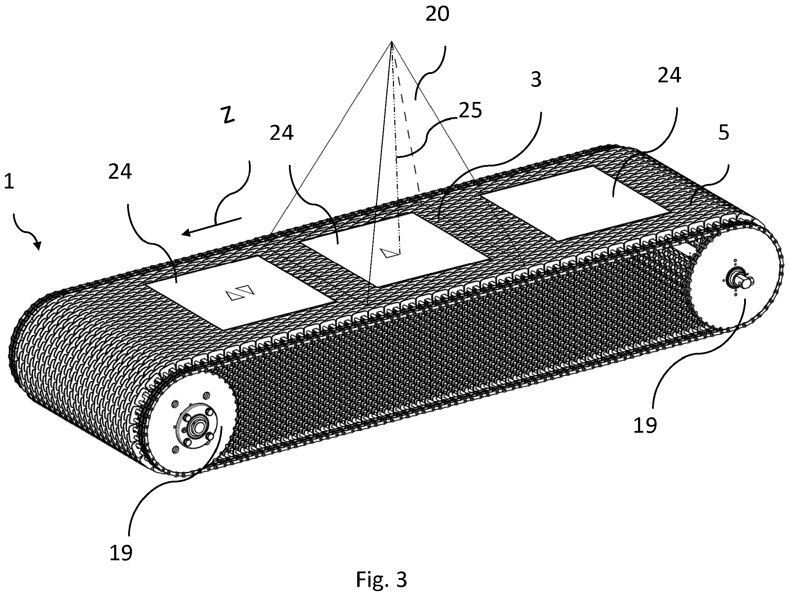

Zwecks Bearbeitens des Werkstücks 24 wird das Werkstück 24 mittels der Fördereinrichtung 1 durch Verfahren des Fördergurts 5 in der Förderrichtung Z zunächst von einer ersten Seite des Bearbeitungsbereichs 3 aus in den Bearbeitungsbereich 3 hinein transportiert. Dies ist insbesondere der Fig. 3 zu entnehmen. Ein in dem Bearbeitungsbereich 3 befindliches Werkstück 24 wird beim Verfahren des Fördergurts 5 in der Förderrichtung Z auf einer der ersten Seite gegenüberliegenden zweiten Seite des Bearbeitungsbereichs 3 aus dem Bearbeitungsbereich 3 heraus transportiert. Das Verfahren des Fördergurts 5 kann schrittweise oder kontinuierlich erfolgen.

Die Vorrichtung 2 weist auf einer dem Laserstrahl 25 zugewandten Seite des Fördergurts 5, somit oberhalb des Bearbeitungsbereichs 3, eine glockenförmig Saugglocke 17 mit einer dem Fördergurt 5 zugewandten Öffnung zum Absaugen von Rauch, Partikeln oder Ähnlichem aus dem Bearbeitungsbereich 3 mittels einer mit der Saugglocke 17 verbindbaren, nicht dargestellten Absaugvorrichtung auf. Zudem dient die Saugglocke 17 dem Absaugen von Fremdstoffen, beispielsweise von Staub, aus dem Bearbeitungsbereich 3, die sich nachteilhaft auf die Bearbeitung des Werkstücks 24 auswirken würden. Die Luft und ggf. in der Luft vorliegende Fremdstoffe werden mittels der Saugglocke 17 und der mit der Saugglocke 17 verbindbaren Absaugvorrichtung aus dem Bearbeitungsbereich 3 der Vorrichtung 2 abgesaugt und dann in Richtung der Pfeile 22 abgefördert.

Unterhalb des Bearbeitungsbereichs 3 weist die Vorrichtung 2 eine weitere Saugglocke 17 auf, wobei die Saugglocke 17 zwischen dem umlaufenden Fördergurt 5 angeordnet ist. Eine Öffnung der Saugglocke 17 ist dabei einer Rückseite des Fördergurts 5 im Bereich des Bearbeitungsbereichs 3 zugewandt. Diese Saugglocke 17 dient zum einen dem Absaugen von Rauch, Partikeln und/oder Staub aus dem Bearbeitungsbereich 3 der Vorrichtung 2 mittels einer mit der Saugglocke 17 verbindbaren, nicht dargestellten Absaugvorrichtung auf. Weiterhin dient die Saugglocke 17 dem Ansaugen des Werkstücks 24 zwecks Fixierens des Werkstücks 24 an dem Fördergurt 5. Die von der zwischen dem Fördergurt 5 angeordneten Saugglocke 17 abgesaugte Luft wird entlang der Pfeile 23 abgeführt.

Des Weiteren weist die Vorrichtung 2 eine unterhalb des Bearbeitungsbereichs 3 und wiederum zwischen dem umlaufenden Fördergurt 5 angeordnete Auffangeinrichtung 18 auf, die dem Auffangen von aus dem Werkstück 24 ausgeschnittenen Teilbereichen dient. Die Auffangeinrichtung 18 weist eine Schublade auf, wodurch die in der Schublade gesammelten Teilabschnitte der bearbeiteten Werkstücke 24 besonders einfach entsorgt werden können.

Der Fördergurt 5 weist eine Trägerstruktur 6 mit mehreren winklig, vorliegend senkrecht, zu der Förderrichtung Z verlaufenden Lagerstäben 10 auf. Der Fördergurt 5 weist zwei senkrecht zu der Förderrichtung Z beabstandete, parallele Ketten 27 auf, wobei abgewandten Enden des jeweiligen Lagerstabs 10 jeweils in einer der zwei umlaufenden Ketten 27 des Fördergurts 5 gelagert sind.

Der Fördergurt 5 weist eine Vielzahl von beabstandet zueinander angeordneten Stützelementen 7 auf, wobei das jeweilige Stützelement 7 einen Lagerabschnitt 8 und einen Stützabschnitt 9 aufweist, wobei das jeweilige Stützelement 7 mit seinem Lagerabschnitt 8 lösbar in der Trägerstruktur 6 gelagert ist, nämlich in zwei in der Förderrichtung Z benachbarten Lagerstäben 10.

Der Stützabschnitt 9 des jeweiligen Stützelements 7 steht an einem dem Lagerabschnitt 8 abgewandten Ende gegenüber der Trägerstruktur 6, welche durch die Ketten 27 und die in den Ketten 27 gelagerten Stäbe 10 gebildet ist, hervor, wobei die Stützabschnitte 9 benachbarter Stützelemente 7 eine Auflagefläche für das Werkstück 24 bilden.

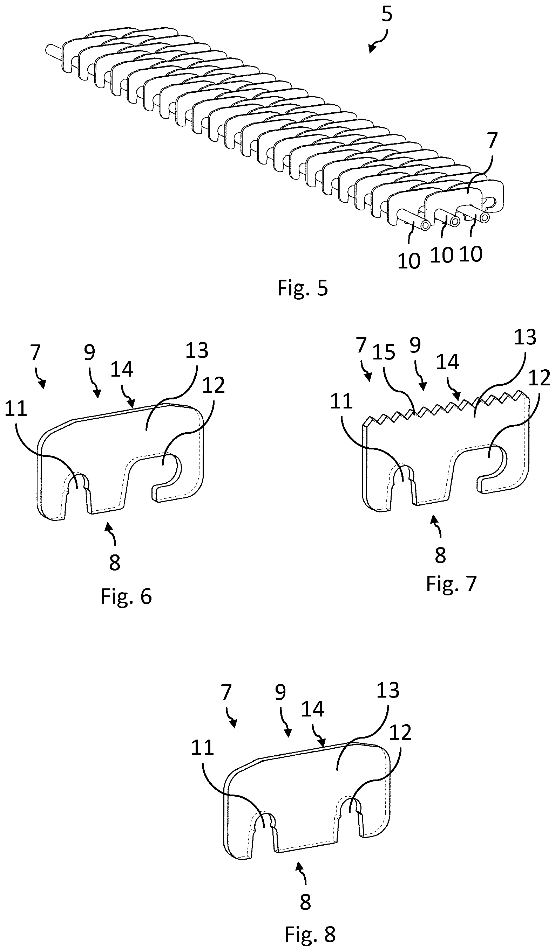

Ein Teilbereich des Fördergurts 5 der Fördereinrichtung 1 gemäß Fig. 1 ist in der Fig. 5 ohne die Ketten 27 dargestellt. Die Fig. 6 zeigt ein einzelnes Stützelement 7 des Fördergurts 5 gemäß Fig. 5. Bei der in der Fig. 6 dargestellten Ausführungsform weist das Stützelement 7 zwei Ausnehmungen 11, 12 auf, wobei die eine Ausnehmung 11 den einen Lagerstab 10 der zwei Lagerstäbe 10 und die andere Ausnehmung 12 den anderen Lagerstab 10 der zwei Lagerstäbe 10 aufnimmt, wie dies in der Fig. 5 dargestellt ist. Die eine Ausnehmung 11 weist dabei zwei in der Förderrichtung Z gegenüberliegende Rastnasen auf, wodurch die eine Ausnehmung 11 den dieser Ausnehmung 11 zugeordneten Lagerstab 10 rastierend aufnimmt.

Das jeweilige Stützelement 7 ist schwenkbar in dem jeweiligen Lagerstab 10 gelagert. Durch die schwenkbare Lagerung des Stützelements 7 in dem jeweiligen Lagerstab 10 ist gewährleistet, dass die Umlenkung des Fördergurts 5 an der jeweiligen Umlenkrolle 19 nicht durch die Stützelemente 7 behindert wird.

Die zwei Ausnehmungen 11, 12 des Stützelements 7 sind in eine dem Stützabschnitt 9 abgewandte Richtung offen, sodass der entsprechende Lagerstab 10 von der dem Stützabschnitt 9 abgewandten Richtung des Stützelements 7 in die entsprechende Ausnehmung 11, 12 eingeführt werden kann.

Die andere Ausnehmung 12 der zwei Ausnehmungen 11, 12 weist in der Förderrichtung Z eine größere Erstreckung auf als der in dieser anderen Ausnehmung 12 aufgenommene andere Lagerstab 10, wobei ein Teilbereich des Lagerabschnitts 8 den in dieser anderen Ausnehmung 12 aufgenommenen Lagerstab 10 auf einer dem Stützabschnitt 9 abgewandten Seite hintergreift. Die eine Ausnehmung 11 der zwei Ausnehmungen 11, 12 hingegen nimmt den in dieser einen Ausnehmung 11 angeordneten einen Lagerstab 10 in der Förderrichtung Z spielfrei auf.

Das Stützelement 7 ist plattenförmig ausgebildet, wobei gegenüberliegende parallele Hauptausdehnungsflächen 13 des Stützelements 7 winklig, vorliegend senkrecht, zu der Förderrichtung Z und senkrecht zu den Stäben 10 ausgebildet sind. Zwischen den Hauptausdehnungsflächen 13 ist eine Außenkante 14 des Stützabschnitts 9 ausgebildet, wobei die Außenkanten 14 der Stützelemente 7 die Auflagefläche für das Werkstück 24 bilden.

Eine derart gestaltete Fördereinrichtung 1 weist eine geringe Kontaktfläche zwischen dem Fördergurt 5 und dem auf dem Fördergurt 5 aufliegenden Werkstück 24 auf, wodurch Rückreflexionen des Laserstrahls 25 in Richtung einer dem Fördergurt 5 zugewandten Seite - Unterseite - des Werkstücks 24 vermieden werden. Die Stützelemente 7 sind vorliegend im Bearbeitungsbereich 3 der Vorrichtung 2 senkrecht zu der Förderrichtung Z ausgebildet.

Durch die zwischen den Stützelementen 7 ausgebildeten Zwischenbereiche kann Luft durch die zwischen dem umlaufenden Fördergurt 5 angeordneten Saugglocke 17 mittels der Absaugvorrichtung durch die Zwischenbereiche hindurch abgesaugt werden, wodurch neben der Absaugung von Staub und Ähnlichen, eine Fixierung des zu bearbeitenden Werkstücks 24 an dem Fördergurt 5 durch einen in den durch das Werkstück 24 abgedeckten Zwischenbereichen entstehenden Unterdruck erreicht wird.

Die in der Fig. 7 dargestellte zweite Ausführungsform des Stützelements 7 unterscheidet sich von der ersten Ausführungsform gemäß Fig. 6 im Wesentlichen dadurch, dass die Außenkante 14 in die der Trägerstruktur 6 abgewandte Richtung hervorstehende Vorsprünge 15 in Form einer Zahnung aufweist. Dadurch wird die Kontaktfläche zwischen der Außenkante 14 und dem an der Außenkante 14 anliegenden Werkstück 24 weiter reduziert.

Das in der Fig. 8 dargestellte dritte Ausführungsbeispiel des Stützelements 7 unterscheidet sich von der ersten Ausführungsform des Stützelements 7 im Wesentlichen dadurch, dass die zwei Ausnehmungen 11, 12 des Stützelements 7 identisch ausgebildet sind. Ein derart gestaltetes Stützelement 7 wird an den Lagerstäben 10 befestigt, indem das Stützelement 7 senkrecht zu der durch die Lagerstäbe 10 ausgebildeten Ebene in die Lagerstäbe 10 eingesteckt wird.

Hingegen werden die erste Ausführungsform und die zweite Ausführungsform des Stützelements 7 mit den Lagerstäben 10 verbunden, indem zunächst das Stützelement 7 derart in Richtung der Lagerstäbe 10 verschoben wird, dass der andere Lagerstab 10 in die andere Ausnehmung 12 eingeführt und so verschoben wird, dass der andere Lagerstab 10 in dem Bereich der anderen Ausnehmung 12 angeordnet ist, in der ein Teilbereich des Lagerabschnitts 8 den in der anderen Ausnehmung 12 aufgenommenen andere Lagerstab 10 auf einer dem Stützabschnitt 9 abgewandten Seite hintergreift. Im Anschluss daran wird das Stützelement 7 um eine durch den in der anderen Ausnehmung 12 angeordneten anderen Lagerstab 10 gebildeten Achse verschwenkt, sodass der eine Lagerstab 10 in die eine Ausnehmung 11 eingeführt wird und in dieser rastierend gehalten ist. Die Demontage der Stützelemente 7 erfolgt entsprechend in der umgekehrten Reihenfolge.

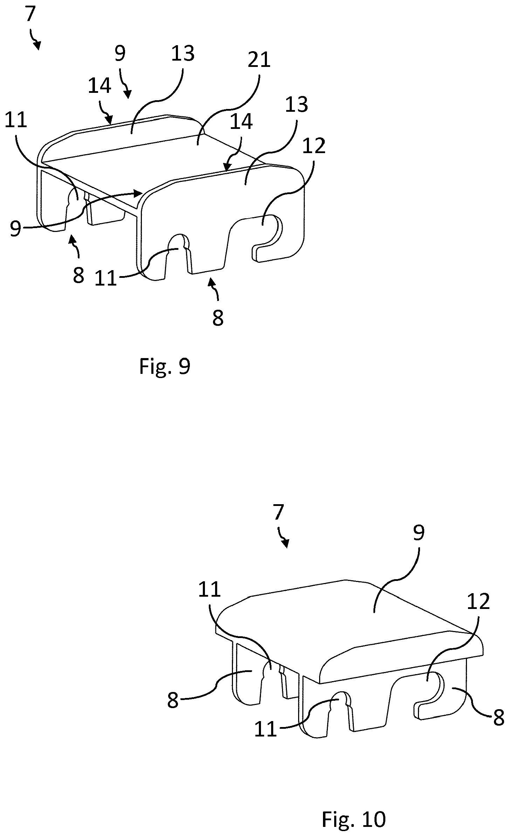

Die in der Fig. 9 dargestellte vierte Ausführungsform des Stützelements 7 unterscheidet sich von der ersten Ausführungsform im Wesentlichen dadurch, dass das Stützelement 7 quasi zwei Stützelemente 7 gemäß der ersten Ausführungsform umfasst, wobei die beiden Stützelemente 7 durch einen senkrecht zu den Hauptausdehnungsflächen 13 ausgebildeten Verbindungsabschnitt 21 miteinander verbunden sind. Insofern weist die vierte Ausführungsform des Stützelements 7 zwei senkrecht zu der Förderrichtung Z beabstandet ausgebildete Lagerabschnitte 8 auf.

Die fünfte Ausführungsform des Stützelements 7 ist in der Fig. 10 dargestellt, wobei sich diese fünfte Ausführungsform des Stützelements 7 von der vierten Ausführungsform des Stützelements 7 im Wesentlichen dadurch unterscheidet, dass in dieser Ausführungsform der Stützabschnitt 9 nicht durch zwischen Hauptausdehnungsflächen 13 ausgebildete Außenkanten 14 gebildet ist, sondern der Stützabschnitt 9 durch eine geschlossene Fläche gebildet ist.

Die jeweiligen Stützelemente 7 bestehen aus Acrylglas.

### Bezugszeichenliste

- 1: Fördereinrichtung
- 2: Vorrichtung
- 3: Bearbeitungsbereich
- 4: Laserquelle
- 5: Fördergurt
- 6: Trägerstruktur
- 7: Stützelement
- 8: Lagerabschnitt
- 9: Stützabschnitt
- 10: Lagerstab
- 11: Ausnehmung
- 12: Ausnehmung
- 13: Hauptausdehnungsfläche
- 14: Außenkante
- 15: Vorsprung
- 16: Laseroptik
- 17: Saugglocke
- 18: Auffangeinrichtung
- 19: Umlenkrolle
- 20: Strahlbereich
- 21: Verbindungsabschnitt
- 22: Pfeil
- 23: Pfeil
- 24: Werkstück
- 25: Laserstrahl
- 27: Kette

- Z: Förderrichtung

## Patentansprüche

1. Vorrichtung (2) zum Bearbeiten eines Werkstücks (24), insbesondere zum Schneiden oder Gravieren eines blattförmigen Werkstücks (24) aus Pappe, Papier oder Folie, aufweisend
eine Laserquelle (4),
einen Bearbeitungsbereich (3) zum Bearbeiten des Werkstücks (24) mittels eines Laserstrahls (25) der Laserquelle (4),
eine Fördereinrichtung (1) zum Transportieren des Werkstücks (24) in den Bearbeitungsbereich (3) der Vorrichtung (2) hinein und aus dem Bearbeitungsbereich (3) der Vorrichtung (2) heraus, wobei die Fördereinrichtung (1) einen in eine Förderrichtung (Z) verfahrbaren Fördergurt (5) aufweist, wobei der Fördergurt (5) eine Trägerstruktur (6) aufweist, wobei die Trägerstruktur (6) mehrere Lagerstäbe (10) aufweist, wobei der Fördergurt (5) eine Vielzahl von beabstandet zueinander angeordneten Stützelementen (7) aufweist, wobei das jeweilige Stützelement (7) einen Lagerabschnitt (8) und einen Stützabschnitt (9) aufweist, wobei das jeweilige Stützelement (7) mit seinem Lagerabschnitt (8) lösbar in der Trägerstruktur (6) gelagert ist und wobei der Stützabschnitt (9) des jeweiligen Stützelements (7) an einem dem Lagerabschnitt (8) abgewandten Ende gegenüber der Trägerstruktur (6) hervorsteht, wobei das jeweilige Stützelement (7) in zwei Lagerstäben (10) gelagert ist, wobei das jeweilige Stützelement (7) schwenkbar in dem jeweiligen Lagerstab (10) gelagert ist, wobei das Stützelement (7) zwei Ausnehmungen (11, 12) aufweist, wobei die eine Ausnehmung (11) den einen Lagerstab (10) der zwei Lagerstäbe (10) und die andere Ausnehmung (12) den anderen Lagerstab (10) der zwei Lagerstäbe (10) aufnimmt, **dadurch gekennzeichnet, dass** die Stützabschnitte (9) benachbarter Stützelemente (7) eine Auflagefläche für das Werkstück (24) bilden, wobei
(i) der Stützabschnitt (9) plattenförmig ausgebildet ist, wobei gegenüberliegende Hauptausdehnungsflächen (13) des Stützabschnitts (9) winklig zu der Förderrichtung (Z) ausgebildet sind, wobei zwischen den Hauptausdehnungsflächen (13) ausgebildete Außenkanten (14) des Stützabschnitts (9) der Stützelemente (7) die Auflagefläche für das Werkstück (24) bilden, wobei die die Auflagefläche bildende Außenkante (14) mehrere in die der Trägerstruktur (6) abgewandte Richtung hervorstehende Vorsprünge (15) aufweist, zur Vermeidung von Reflexionen des Laserstrahls auf eine Unterseite des Werkstücks (24), und/oder
(ii) der Stützabschnitt (9) des Stützelements (7) einen sich in die der Trägerstruktur (6) abgewandte Richtung verjüngenden Querschnitt aufweist, zur Vermeidung von Reflexionen des Laserstrahls auf die Unterseite des Werkstücks (24).

2. Vorrichtung (2) nach Anspruch 1, **dadurch gekennzeichnet, dass** die mehreren Lagerstäbe (10) winklig zu der Förderrichtung (Z) verlaufen, insbesondere das jeweilige Stützelement (7) in zwei in der Förderrichtung (Z) benachbarten Lagerstäben (10) gelagert ist.

3. Vorrichtung (2) nach einem der Anspruch 1 oder 2, **dadurch gekennzeichnet, dass** die eine Ausnehmung (11) und/oder die andere Ausnehmung (12) den jeweiligen Lagerstab (10) rastierend aufnimmt.

4. Vorrichtung (2) nach Anspruch 3, **dadurch gekennzeichnet, dass** die zwei Ausnehmungen (11, 12) des Stützelements (7) in eine dem Stützabschnitt (9) abgewandte Richtung offen sind.

5. Vorrichtung (2) nach Anspruch 3, **dadurch gekennzeichnet, dass** die eine Ausnehmung (11) der zwei Ausnehmungen (11, 12) des Stützelements (7) in eine dem Stützabschnitt (9) abgewandte Richtung offen ist und die andere Ausnehmung (12) der zwei Ausnehmungen (11, 12) in der Förderrichtung (Z) offen ist oder entgegengesetzt zu der Förderrichtung (Z) offen ist.

6. Vorrichtung (2) nach Anspruch 3 bis 5, **dadurch gekennzeichnet, dass** die andere Ausnehmung (12) der zwei Ausnehmungen (11, 12) in der Förderrichtung (Z) eine größere Erstreckung aufweist als der in dieser anderen Ausnehmung (12) aufgenommene andere Lagerstab (10), vorzugsweise ein Teilbereich des Lagerabschnitts (8) den in dieser anderen Ausnehmung (12) aufgenommenen andere Lagerstab (10) auf einer dem Stützabschnitt (9) abgewandten Seite hintergreift.

7. Vorrichtung (2) nach einem der Ansprüche 1 bis 6, **dadurch gekennzeichnet, dass** der Fördergurt (5) als umlaufender Fördergurt (5) ausgebildet ist.

8. Vorrichtung (2) nach einem der Ansprüche 1 bis 7, **dadurch gekennzeichnet, dass** der Lagerabschnitt (8), vorzugsweise das Stützelement (7), plattenförmig ausgebildet ist, wobei gegenüberliegende Hauptausdehnungsflächen (13) des Lagerabschnitts (8) winklig, insbesondere senkrecht, zu der Förderrichtung (Z) ausgebildet sind.

9. Vorrichtung (2) nach einem der Ansprüche 1 bis 8, wobei die gegenüberliegenden Hauptausdehnungsflächen (13) des Stützabschnitts (9) senkrecht zu der Förderrichtung (Z) ausgebildet sind.

10. Vorrichtung (2) nach einem der Ansprüche 1 bis 9, **dadurch gekennzeichnet, dass** das Stützelement (7) zwei senkrecht zu der Förderrichtung (Z) beabstandete Lagerabschnitte (8) aufweist.

11. Vorrichtung (2) nach einem der Ansprüche 1 bis 10, **dadurch gekennzeichnet, dass** der Stützabschnitt (9) und/oder der Lagerabschnitt (8) eine raue Oberfläche aufweist, zur Vermeidung von Reflexionen des Laserstrahls auf die Unterseite des Werkstücks (24).

## Claims

1. Apparatus (2) for treating a workpiece (24), in particular for cutting or engraving a sheet workpiece (24) made of paperboard, paper or film, having
a laser source (4),
a treatment area (3) for treating the workpiece (24) by means of a laser beam (25) from the laser source (4),
a conveying device (1) for transporting the workpiece (24) into the treatment area (3) of the apparatus (2) and out of the treatment area (3) of the apparatus (2), wherein the conveying device (1) has a conveyor belt (5) that can be moved in a conveying direction (Z), wherein the conveyor belt (5) has a carrier structure (6), wherein the carrier structure (6) has a plurality of bearing rods (10), wherein the conveyor belt (5) has a multiplicity of supporting elements (7) arranged at a distance from one another, wherein the respective supporting element (7) has a bearing section (8) and a supporting section (9), wherein the respective supporting element (7) is detachably supported by its bearing section (8) in the carrier structure (6), and wherein the supporting section (9) of the respective supporting element (7) projects with respect to the carrier structure (6) at an end facing away from the bearing section (8), wherein the respective supporting element (7) is mounted in two bearing rods (10), wherein the respective supporting element (7) is pivotably mounted in the respective bearing rod (10), wherein the supporting element (7) has two recesses (11, 12), wherein one recess (11) accommodates one bearing rod (10) of the two bearing rods (10), and the other recess (12) accommodates the other bearing rod (10) of the two bearing rods (10), **characterized in that** the supporting sections (9) of the adjacent supporting elements (7) form a supporting surface for the workpiece (24), wherein
(i) the supporting section (9) is plate-like, wherein opposite main extension surfaces (13) of the supporting section (9) are formed at an angle to the conveying direction (Z), wherein outer edges (14) of the supporting section (9) of the supporting elements (7), formed between the main extension surfaces (13), form the supporting surface for the workpiece (24), wherein the outer edge (14) forming the supporting surface has a plurality of projections (15) projecting in the direction facing away from the carrier structure (6) in order to avoid reflections of the laser beam onto an underside of the workpiece (24), and/or
(ii) the supporting section (9) of the supporting element (7) has a cross section tapering in the direction facing away from the carrier structure (6) to avoid reflections of the laser beam onto the underside of the workpiece (24) .

2. Apparatus (2) according to Claim 1, **characterized in that** the plurality of bearing rods (10) extend at an angle to the conveying direction (Z), in particular the respective supporting element (7) is mounted in two bearing rods (10) that are adjacent in the conveying direction (Z).

3. Apparatus (2) according to either of Claims 1 and 2, **characterized in that** one recess (11) and/or the other recess (12) accommodates the respective bearing rod (10) in a latching manner.

4. Apparatus (2) according to Claim 3, **characterized in that** the two recesses (11, 12) of the supporting element (7) are open in a direction facing away from the supporting section (9).

5. Apparatus (2) according to Claim 3, **characterized in that** one recess (11) of the two recesses (11, 12) of the supporting element (7) is open in a direction facing away from the supporting section (9), and the other recess (12) of the two recesses (11, 12) is open in the conveying direction (Z) or opposite to the conveying direction (Z).

6. Apparatus (2) according to Claim 3 to 5, **characterized in that** the other recess (12) of the two recesses (11, 12) has a greater extent in the conveying direction (Z) than the other bearing rod (10) accommodated in this other recess (12), preferably a portion of the bearing section (8) engages behind the other bearing rod (10) accommodated in this other recess (12) on a side facing away from the supporting section (9) .

7. Apparatus (2) according to one of Claims 1 to 6, **characterized in that** the conveyor belt (5) is constructed as a circulating conveyor belt (5).

8. Apparatus (2) according to one of Claims 1 to 7, **characterized in that** the bearing section (8), preferably the supporting element (7), is plate-like, wherein opposite main extension surfaces (13) of the bearing section (8) are formed at an angle, in particular at right angles, to the conveying direction (Z).

9. Apparatus (2) according to one of Claims 1 to 8, wherein the opposite main extension surfaces (13) of the supporting section (9) are formed at right angles to the conveying direction (Z).

10. Apparatus (2) according to one of Claims 1 to 9, **characterized in that** the supporting element (7) has two bearing sections (8) spaced apart at right angles to the conveying direction (Z).

11. Apparatus (2) according to one of Claims 1 to 10, **characterized in that** the supporting section (9) and/or the bearing section (8) has a rough surface to avoid reflections of the laser beam onto the underside of the workpiece (24).

## Revendications

1. Dispositif (2) permettant de traiter une pièce (24), en particulier de découper ou de graver une pièce sous forme de feuille (24) en carton, en papier ou en film, présentant
une source laser (4),
une zone de traitement (3) pour traiter la pièce (24) au moyen d'un rayon laser (25) de la source laser (4),
un dispositif de transport (1) pour transporter la pièce (24) dans la zone de traitement (3) du dispositif (2) et hors de la zone de traitement (3) du dispositif (2), le dispositif de transport (1) présentant une bande de transport (5) déplaçable dans une direction de transport (Z), la bande de transport (5) présentant une structure porteuse (6), la structure porteuse (6) présentant plusieurs tiges de palier (10), la bande de transport (5) présentant une pluralité d'éléments de support (7) disposés de manière espacée les uns par rapport aux autres, ledit élément de support respectif (7) présentant une partie de palier (8) et une partie de support (9), dans lequel ledit élément de support respectif (7) est monté détachable par sa partie de palier (8) dans la structure porteuse (6), et dans lequel la partie de support (9) de l'élément de support respectif (7) fait saillie par rapport à la structure porteuse (6) à une extrémité détournée de la partie de palier (8), l'élément de support respectif (7) étant monté sur deux tiges de palier (10), l'élément de support respectif (7) étant monté pivotant sur la tige de palier respective (10), l'élément de support (7) présentant deux évidements (11, 12), ledit un évidement (11) recevant ladite une tige de palier (10) des deux tiges de palier (10) et l'autre évidement (12) recevant l'autre tige de palier (10) des deux tiges de palier (10), **caractérisé en ce que** les parties de support (9) d'éléments de support voisins (7) forment une surface d'appui pour la pièce (24), dans lequel
(i) la partie de support (9) est réalisée sous forme de plaque, des surfaces d'extension principales (13) opposées de la partie de support (9) étant réalisées selon un angle par rapport à la direction de transport (Z), dans lequel des bords extérieurs (14) réalisés entre les surfaces d'extension principales (13) de la partie de support (9) des éléments de support (7) forment la surface d'appui pour la pièce (24), dans lequel le bord extérieur (14) formant la surface d'appui présente plusieurs saillies (15) dépassant dans la direction détournée de la structure porteuse (6) afin d'éviter des réflexions du rayon laser sur la face inférieure de la pièce (24), et/ou
(ii) la partie de support (9) de l'élément de support (7) présente une section transversale s'amincissant dans la direction détournée de la structure porteuse (6) pour éviter des réflexions du rayon laser sur la face inférieure de la pièce (24).

2. Dispositif (2) selon la revendication 1, **caractérisé en ce que** les plusieurs tiges de palier (10) s'étendent selon un angle par rapport à la direction de transport (Z), en particulier **en ce que** l'élément de support respectif (7) est monté sur deux tiges de palier (10) voisines dans la direction de transport (Z).

3. Dispositif (2) selon l'une quelconque des revendications 1 et 2, **caractérisé en ce que** ledit un évidement (11) et/ou l'autre évidement (12) reçoivent la tige de palier (10) respective par enclenchement.

4. Dispositif (2) selon la revendication 3, **caractérisé en ce que** les deux évidements (11, 12) de l'élément de support (7) sont ouverts dans une direction détournée de la partie de support (9).

5. Dispositif (2) selon la revendication 3, **caractérisé en ce que** ledit un évidement (11) des deux évidements (11, 12) de l'élément de support (7) est ouvert dans une direction détournée de la partie de support (9) et l'autre évidement (12) des deux évidements (11, 12) est ouvert dans la direction de transport (Z) ou est ouvert à l'opposé de la direction de transport (Z).

6. Dispositif (2) selon la revendication 3 à 5, **caractérisé en ce que** l'autre évidement (12) des deux évidements (11, 12) présente dans la direction de transport (Z) une plus grande extension que l'autre tige de palier (10) reçue dans cet autre évidement (12), de préférence **en ce qu'**une zone partielle de la partie de palier (8) saisit à l'arrière l'autre tige de palier (10) reçue dans cet autre évidement (12) sur un côté détourné de la partie de support (9).

7. Dispositif (2) selon l'une quelconque des revendications 1 à 6, **caractérisé en ce que** la bande de transport (5) est réalisée comme une bande de transport (5) périphérique.

8. Dispositif (2) selon l'une quelconque des revendications 1 à 7, **caractérisé en ce que** la partie de palier (8), de préférence l'élément de support (7), est réalisée sous forme de plaque, des surfaces d'extension principales (13) de la partie de palier (8) étant réalisées selon un angle, en particulier perpendiculairement à la direction de transport (Z).

9. Dispositif (2) selon l'une quelconque des revendications 1 à 8, dans lequel les surfaces d'extension principales opposées (13) de la partie de support (9) sont réalisées perpendiculairement à la direction de transport (Z).

10. Dispositif (2) selon l'une quelconque des revendications 1 à 9, **caractérisé en ce que** l'élément de support (7) présente deux parties de palier (8) espacées perpendiculairement à la direction de transport (Z).

11. Dispositif (2) selon l'une quelconque des revendications 1 à 10, **caractérisé en ce que** la partie de support (9) et/ou la partie de palier (8) présentent une surface rugueuse pour éviter des réflexions du rayon laser sur la face inférieure de la pièce (24).
